# FASCICULE DE BREVET EUROPEEN

(11) **EP 1 745 108 B1**
(45) Date de publication et mention de la délivrance du brevet: **11.03.2009**
(21) Numéro de dépôt: 05757226.5
(22) Date de dépôt: 07.04.2005
(51) Int. Cl.: C08L 95/00

(54) **PROCEDE DE FABRICATION D'ASPHALTE COULE**
VERFAHREN ZUR HERSTELLUNG VON GUSSASPHALT
METHOD FOR MAKING POURED ASPHALT

(30) Priorité: 07.04.2004 DE 102004017598; 28.04.2004 DE 102004020967
(43) Date de publication de la demande: 24.01.2007
(73) Titulaire: Eurovia, 92500 Rueil-Malmaison (FR)
(72) Inventeur: PASS, Friedrich, 46244 Bottrop-Kirchhellen (DE); VON DEVIVERE, Max, NL-3818 ED Amersfoort (NL)
(74) Mandataire: Ahner, Francis
(86) Numéro de dépôt international: PCT/FR2005/000854
(87) Numéro de publication internationale: WO 2005/100480

(56) Documents cités:
- DE-A1- 4 323 256
- DE-C1- 4 308 567
- US-A- 2 720 466
- US-A- 4 371 400

## Description

L'invention concerne à la fois un procédé de fabrication d'asphalte coulé et un asphalte coulé.

L'asphalte coulé est utilisé à des fins spécifiques pour les revêtements en voirie, essentiellement pour des surfaces soumises à des contraintes importantes et pour le revêtement de la chaussée des ponts ; il est également employé dans le bâtiment et pour les dallages industriels, comme chape.

L'asphalte coulé est décrit dans la norme DIN 4109 et dans les clauses techniques supplémentaires - asphalte, version 2001 (ZT'V Asphalt - StB 01, Ausgabe 2001). L'asphalte coulé y est défini comme une masse bitumineuse compacte constituée de gravillons, de sable, de filler (ci-dessous appelé matière de charge) et de bitumes routiers ou de bitumes routiers et d'asphalte naturel dans laquelle les matières minérales sont mélangées de manière à ne laisser que peu de vide. La teneur et la consistance du liant doivent être déterminées en fonction des vides entre les matières premières minérales, de façon à ce que, une fois l'asphalte posé, tous les vides soient comblés et qu'il n'y ait qu'un léger excédent de liant bitumineux.

Le mélange, qui porte le nom d'asphalte coulé, peut être coulé et étalé à chaud et il est d'une grande compacité après refroidissement. Il est donc particulièrement approprié pour le revêtement routier. A la différence de l'enrobé bitumineux classique, il n'est pas nécessaire de compacter l'asphalte coulé au rouleau lors de sa mise en place.

L'asphalte coulé doit à la fois offrir une bonne stabilité (comportement de déformation) et être facile à travailler. L'avantage de l'asphalte coulé étant précisément de ne pas nécessiter de compactage lors de la mise en place, il doit être facile à couler et à étaler.

L'utilisation d'asphalte coulé dans les chapes présente des avantages par rapport aux chapes traditionnelles en béton de ciment. Après avoir été coulée, une chape en béton de ciment doit durcir pendant plusieurs semaines avant que l'on puisse marcher dessus. En revanche on peut marcher sur l'asphalte coulé et l'utiliser dès qu'il a refroidi.

En règle générale, pour fabriquer de l'asphalte coulé, on mélange les matières premières minérales chaudes (les gravillons et le sable), et les matières de charge minérales froides (ainsi que des fines) dans un mélangeur (ou malaxeur). La plupart du temps, la température des matières premières chaudes est nettement supérieure à 250°C, voire proches de 300°C. L'ajout de matière de charge froide ou plus froide fait légèrement baisser la température. On injecte le mélange bitumineux (ou le bitume) également très chaud et très fluide dans le mélange de matières premières minérales et l'asphalte coulé est produit par malaxage du tout. Pour plus de détails sur les processus de fabrication standard actuels, on peut consulter le document EP 0 048 792 B1. On trouvera par exemple des informations sur les liants bitumineux chez Rühl, Kluger *Manuel des produits chimiques du bâtiment,* dans la partie *Bitumes et produits bitumineux 1 V-19.*

Lors de la fabrication conventionnelle de revêtements de chaussées en asphalte coulé, on atteint, lors de la pose, des températures de travail de près de 250°C. Dans cette application à chaud, on dépasse souvent largement le seuil d'émissions de vapeurs de bitume et d'aérosols, fixé par les règlements techniques pour les produits dangereux (TRGS 900) à 10mg/m³. Le seuil d'émissions est en particulier souvent dépassé lorsque on utilise l'asphalte coulé dans des espaces fermés, par exemple comme revêtement carrossable dans des immeubles de parking et des parkings souterrains ou pour couler des chapes dans des bâtiments industriels ou des immeubles parce que l'échange d'air avec l'extérieur y est limité.

La meilleure solution pour réduire les émissions lors de la pose de l'asphalte coulé consiste à réduire la température de travail lors de la pose. Ceci est valable également pour la fabrication de l'asphalte coulé et le remplissage des camions. En réduisant d'environ 10°C la température de travail de l'asphalte coulé lors de la pose, on peut réduire les émissions d'environ 50% par rapport aux valeurs initiales. La réduction des émissions en fonction de la baisse de la température dépend de la teneur du bitume en hydrocarbures qui atteignent facilement leur point d'ébullition.

La température de travail désigne ici et ci-dessous la température à laquelle l'asphalte coulé liquide est travaillé, c'est à dire étendu pour faire un revêtement ou une chape.

Les institutions dont les membres travaillent avec des bitumes ou des produits bitumineux ou sont responsables du travail avec des bitumes ou des produits bitumineux ont réfléchi aux moyens de réduire les émissions produites lors de l'emploi d'asphalte coulé. Cela a donné "l'asphalte coulé basse température".

Dans ce cas, on obtient une diminution de la température de travail lors de la pose par ajout de cires. Les cires peuvent être définies comme des substances naturelles ou synthétiques, qui, d'une manière générale, présentent les propriétés suivantes :
- à 20°C elles sont malaxables, solides éventuellement cassantes, d'une cristallinité grossière à fine,
- au dessus de 40°C elles sont fluides et déjà légèrement au dessus de leur point de fusion faiblement visqueuses.
Les cires sont préférées aux paraffines. Les cires se distinguent des paraffines par exemple de par leur point de fusion : celui des cires est généralement supérieur à 70°C. Lesdites cires contiennent des molécules carbonées comprenant généralement plus de 45 atomes de carbone. Le point de fusion et le comportement à 20°C dépendent principalement de la masse moléculaire et de la cristallinité des cires. Plus la masse moléculaire est élevée, plus le point de fusion et la solidité à 20°C sont également élevés. De bons résultats sont obtenus avec des cires de l'industrie minière modifiées, des amides d'acides gras et des cires Fisher-Tropsch (cf. l'intervention faite au colloque VSVI à Friedberg le 3 décembre 2003 sur le thème « asphalte basse température » et le prospectus de l'entreprise Clariant GmbH sur le Licomont, un mélange de dérivés d'acides gras, utilisé comme adjuvant pour liant bitumineux). Les cires, dont le point de fusion est à plus de 70°C, se sont avérées particulièrement utiles pour la fabrication d'asphalte coulé. Les cires proposées à cet usage ont souvent une température de fusion d'environ 100°C et une masse moléculaire de 500 g/mol. Lesdites cires ont avantageusement également une structure cristalline.

Ce procédé permet au mieux d'abaisser la température de travail pour la pose de l'asphalte coulé à 205°C et dans ce cas on parle d'asphalte coulé basse température.

L'utilité des cires comme adjuvant pour l'asphalte coulé s'explique par la viscosité relativement faible des cires à la température de travail de l'asphalte coulé lors de la pose. Les cires ont un effet positif car elles accroissent la fluidité du liant. Cela permet de conserver la fluidité de l'asphalte coulé et de le poser même à la température plus faible indiquée ci-dessus. Mais il faut toutefois limiter le pourcentage de cires dans le liant pour éviter une détérioration de la stabilité du revêtement en asphalte coulé. Les cires présentent en particulier un inconvénient : à basse température, elles durcissent et deviennent cassantes. Des fissures peuvent alors apparaître dans le revêtement en asphalte coulé. A l'usage, des teneurs d'environ 3% de cire dans le liant ont donné de bons résultats. L'utilisation de cires a notamment été décrit dans le brevet US 2 720 466.

D'autre part, la demande de brevet EP 0 048 792 propose d'obtenir une réduction de la température de travail lors de la pose de 20 à 30°C maximum par l'apport de zéolithes ou d'un mélange de zéolithes comme adjuvant dans une proportion de 0,2 à 5%. Les zéolithes ont une forte teneur en eau de cristallisation (de 20 à 22% pour les zéolithes synthétiques) et à des températures comprises entre 100°C et 200°C, elles libèrent la plus grande partie de cette eau sous forme de vapeur. Il en résulte une augmentation du volume qui est censée avoir un impact positif sur la maniabilité du mélange. Cet effet moussant est censé améliorer la fluidité du mélange et permettre de réduire la température.

En réalité, on a constaté que l'utilisation de zéolithes pour réduire la température de travail n'est efficace que pour l'enrobé bitumineux compacté au rouleau. Il n'a pas été possible jusqu'ici de réaliser de cette façon un asphalte coulé facile à poser.

La demande de brevet DE 43 23 256 A1 explique en détail l'utilisation des zéolithes comme adjuvant pour abaisser la température de travail de l'asphalte et en particulier de l'enrobé compacté. On y trouve également des informations précises sur les zéolithes utilisables (zéolithe A) et sur l'utilisation éventuellement moins coûteuse de zéolithes naturelles avec une plus faible teneur en eau de cristallisation.

L'invention a pour objectif de définir à la fois un procédé de fabrication d'asphalte coulé et un asphalte coulé. Cet asphalte coulé peut être posé à une température de travail qui est encore sensiblement inférieure à celle de l'asphalte coulé basse température actuel, c'est à dire inférieure à 200°C, tout en présentant la stabilité nécessaire pour le revêtement routier et les chapes.

La réduction de la température de travail présente des avantages économiques (économie d'énergie) et écologiques (réduction des émissions des vapeurs de bitumes et aérosols).

L'invention résout la problématique décrite ci-dessus par un procédé de fabrication d'asphalte coulé, dans lequel on mélange les matières premières minérales chaudes de l'asphalte coulé dans un mélangeur (ou malaxeur) puis on ajoute à ce mélange chaud un liant bitumineux de préférence chaud, en ajoutant au mélange et plus précisément avec le liant, une petite quantité de cires, soit 1 à 8 pour-cent de la masse du liant, caractérisé en ce que l'on ajoute au mélange, de préférence avec le liant, avantageusement juste avant le liant, une petite quantité, soit 0,1 à 2 pour-cent de la masse de l'ensemble du mélange d'un autre composant qui réduise la température de travail du mélange mais qui ne soit pas de même nature que les cires.

Pour permettre une bonne compréhension des explications qui suivent, il faut souligner que tous les pourcentages indiqués dans cette description doivent être considérés comme des pourcentages exprimés en poids par rapport au poids total de la composition d'asphalte coulé s'il n'y a pas d'autre précision explicite.

Tout le sens de cette invention repose sur l'idée que l'on ne peut pas et donc que l'on ne doit pas augmenter à volonté le pourcentage du composant utilisé comme adjuvant dans le mélange pour abaisser la température de travail. L'invention consiste à ajouter à ce premier composant, c'est à dire aux cires, un autre composant de nature différente. Avec le premier composant "cire", on utilise de préférence comme deuxième composant une zéolithe ou un mélange de zéolithes.

Selon le procédé selon l'invention, le mélange fini peut avantageusement être posé à une température de travail de moins de 205°C, de préférence de moins de 190°C, voire même dans certains cas de moins de 180°.C et parfois même de moins de 170°C voire de 160°C.

Le mélange fini, avec tous les adjuvants, est avantageusement malaxé pendant un certain temps avant la pose, de préférence dans un camion mélangeur, et maintenu de préférence à la température de travail.

On utilise également préférentiellement un composant qui libère un maximum de vapeur d'eau dans des conditions de pression normales à des températures comprises entre 100°C et 200°C et plus particulièrement entre 150°C et 180°C.

Jusqu'ici les spécialistes étaient tous unanimes à considérer que les composants de nature différente qui peuvent être utilisés dans la fabrication de l'asphalte coulé pour abaisser la température de travail du mélange s'excluent mutuellement. Les études détaillées faites par les inventeurs ont toutefois montré que, si l'on veille soigneusement à l'équilibre du mélange, il n'y a pas d'interaction négative des différents adjuvants. Il est en particulier étonnant de constater qu'une zéolithe ou qu'un mélange de zéolithes seront un adjuvant pleinement efficace pour abaisser la température du mélange, bien que l'on ait utilisé des cires en quantité correspondante comme premier adjuvant de l'asphalte coulé.

Le procédé selon l'invention est plus particulièrement caractérisé par l'ajout dans le mélange de composants de nature différente des cires et qui dégagent de la vapeur d'eau, en particulier d'une zéolithe ou d'un mélange de zéolithes, de la chaux hydratée et/ou de l'acide silicique.

Selon une variante avantageuse de l'invention, l'autre composant utilisé est une zéolithe naturelle et/ou synthétique, ou sa phase de synthèse initiale amorphe. La zéolithe est avantageusement une zéolithe fibreuse, une zéolithe lamellaire et/ou une zéolithe cubique. La zéolithe utilisée peut appartenir au groupe de saujasites, chabasites, phillipstes, clilioptilolites, et/ou paulingites. La zéolithe utilisée est encore plus avantageusement une zéolithe synthétique du type A, P, X et/ou Y.

Par comparaison aux zéolithes de sources naturelles, les zéolithes synthétiques ont souvent l'avantage de présenter une homogénéité et une qualité constante, ce qui est avantageux notamment pour la finesse requise.

L'ajout d'une zéolithe qui contient de l'eau de cristallisation ou d'un autre composant qui dégage de l'eau provoque cet effet moussant, par transformation de l'eau en vapeur d'eau. Jusqu'ici cette méthode n'a toutefois pas permis de développer un procédé applicable en pratique pour l'asphalte coulé. Il est donc surprenant que l'on puisse obtenir un résultat positif en utilisant des cires comme premier composant pour réduire la température de travail de l'asphalte coulé puis en ajoutant une zéolithe qui contient de l'eau de cristallisation ou un autre composant qui dégage de l'eau. En outre, l'effet moussant qui est caractéristique de la zéolithe ou d'un autre composant qui dégage de l'eau semble même dans un premier temps contrecarrer l'augmentation de la fluidité du mélange due à l'effet des cires.

Mais les études réalisées ont prouvé que l'on peut obtenir une fluidité élevée à basse température si l'on utilise deux composants qui ne sont pas de même nature. Et on obtient en fin de compte un revêtement en asphalte coulé refroidi d'une excellente stabilité.

On a constaté qu'on peut obtenir une température de travail inférieure à 205°C, voire même nettement inférieure à 180°C si l'on utilise de façon conséquente toutes les possibilités. Compte tenu de la relation importante entre la température de travail et les émissions d'aérosols, cela constitue un progrès considérable qui donne au concept d'asphalte coulé basse température une toute nouvelle signification.

Il est préférable que le mélange fini, avec tous ses adjuvants, soit malaxé pendant un certain temps avant la pose et maintenu à la température de travail dans un camion porteur malaxeur.

On utilisera de préférence une zéolithe synthétique, en particulier la zéolithe de type A que l'on utilise dans la fabrication des lessives comme produit de substitution des phosphates, ou un mélange de zéolithes synthétiques et/ou sa phase de synthèse initiale amorphe. Les zéolithes de type A répondent avantageusement à la formule générale suivante :
1,0±10,2 M₂O.Al₂O₃.2,0±0,5 SiO₂ . yH₂On

Les zéolithes de type A sont par exemple décrites dans les demandes de brevet DE 24 47 021, DE 25 17 218, DE 26 51 485. On utilise en particulier une zéolithe de type A de formule brute Na₁₂(AlO₂)₁₂(SiO₂)₁₂, 27 H₂O où Na₂O est de 18 %, Al₂O₃ de 28 %, SiO₂ de 33 % et H₂O de 21 %.

Comme exemple de zéolithe appropriée, on peut citée la zéolithe commercialisée sous le nom aspha-min®.

Du point de vue quantitatif, on a constaté qu'il faut d'utiliser le deuxième composant à hauteur de 0,1 à 2%, de préférence de 0,3 à 0,5% de l'ensemble du mélange. ,

On peut remplacer les zéolithes de synthèse par des zéolithes naturelles. La teneur en eau de cristallisation des zéolithes naturelles n'est que de 10 à 12% et il faut donc deux fois plus de zéolithes naturelles ou du mélange correspondant que de zéolithes de synthèse. Le choix se fera en fonction de l'application. Ainsi, dans une variante du procédé selon l'invention, si on utilise une zéolithe naturelle ou d'un mélange de zéolithes naturelles, il faut un apport d'une quantité de zéolithe naturelle ou de mélange de zéolithes naturelles double de celle que l'on aurait utilisé avec une zéolithe de synthèse ou un mélange de zéolithes de synthèse.

Dans le procédé selon l'invention, on utilise les cires dans une quantité équivalente à environ 1% à 8% et de préférence environ 2,5% à 5% du liant injecté dans le mélange. On utilise avantageusement un bitume routier dur ou un bitume dur comme liant ou comme base du liant.

Selon une variante avantageuse du procédé, on peut également introduire dans le mélange une faible quantité d'un composant supplémentaire qui diminue la température du mélange mais qui n'appartient ni à la famille des cires, ni à celle des zéolithes. Par exemple, on peut introduire de la chaux hydratée et/ou de l'acide silicique et/ou une amine quaternaire comme autre composant ou comme composant supplémentaire pour abaisser la température de travail du mélange.

L'acide silicique peut être d'origine synthétique, tel que ceux décrits dans la demande EP 0 048 792, colonne 2, ligne 32 à colonne 3, ligne 44.

Dans le cadre de l'invention l'asphalte coulé est avantageusement fabriqué comme asphalte de revêtement routier ou pour des dalles en asphalte coulé.

La présente invention a également pour objet un asphalte coulé, contenant des matières premières minérales, un liant bitumineux et une petite quantité de cires, soit 1 à 80% environ de la masse du liant, caractérisé par l'ajout d'une petite quantité soit 0,1 à 2% de l'ensemble du mélange, d'au moins un autre composant qui permet de diminuer la température de travail de l'asphalte coulé, mais qui n'est pas de la famille des cires.

Avantageusement, ledit composant supplémentaire libère de l'eau. Il est avantageusement une zéolithe ou un mélange de zéolithes, de la chaux hydratée et/ou de l'acide silicique. En particulier, une zéolithe de synthèse ou un mélange de zéolithes de synthèse et/ ou sa phase de synthèse initiale amorphe, tels que définis précédemment.

Le composant supplémentaire, avantageusement une zéolithe, représente environ 0,1% à 2% et de préférence environ 0,3 à 0,5% de l'ensemble du mélange. Lorsqu'on utilise une zéolithe naturelle ou un mélange de zéolithes naturelles, il faut deux fois plus de zéolithes naturelles ou du mélange correspondant que de zéolithes de synthèse, avantageusement 0,3 à 1% de l'ensemble du mélange.

L'asphalte coulé contient une quantité de cires d'environ 1 à 8% et de préférence de 2,5 à 5% environ de la masse du liant. Le liant ou au moins la base du liant est avantageusement un bitume routier dur ou un bitume dur.

Selon une variante avantageuse de l'invention, l'asphalte coulé contient une petite quantité d'un composant supplémentaire qui diminue la température de travail de l'asphalte coulé mais qui n'est ni de la famille des cires ni de celle des zéolithes, par exemple de la chaux hydratée et/ou de l'acide silicique et/ou une amine quaternaire.

L'asphalte coulé selon l'invention est avantageusement développé comme asphalte coulé routier ou comme chape en asphalte coulé.

Dans l'exemple de réalisation que privilégient les inventeurs et qui a déjà été vérifié par des essais, il est prévu d'utiliser des cires dans une proportion de 1% à 8% environ et de préférence de 2,5% à 5% environ du liant présent dans le mélange. On utilise dans le même temps les quantités mentionnées ci-dessus de zéolithes ou de mélanges de zéolithes.

On peut préalablement mélanger la cire au liant et injecter ensuite le mélange cire/liant dans les matières premières minérales chaudes de l'asphalte coulé. Mais on peut aussi injecter indépendamment l'un de l'autre la cire et le liant dans la masse.

Pour fabriquer l'asphalte coulé, il est important de savoir si l'asphalte coulé va être utilisé comme revêtement routier ou en chape. Les matières premières minérales et le liant seront choisis en fonction de l'utilisation visée.

Pour faire le liant bitumineux, il est recommandé d'utiliser comme base du liant un bitume routier dur ou un bitume dur.

Dans le cas d'application concret, le mélange de matières premières minérales est composé d'environ 50% de gravillons de calibre 2 à 11mm environ, d'environ 25% de sable de calibre 0 à 2mm et d'environ 25% de fines (filler et poudres). A cela s'ajoute un liant bitumeux, soit du bitume routier dur, soit du bitume dur, soit du bitume polymère modifié, à hauteur de 6,5% à 10% environ et de préférence de 7% à 7,5% environ des 100% de la masse définie ci-dessus. On ajoute au liant environ 2% à 5% de cires (en poids par rapport au poids du liant), de préférence du Licomont® pour accroître la fluidité et diminuer la température de travail. Ensuite on ajoute des zéolithes à hauteur de 0,3 à 0,5% environ de la masse des matières premières minérales. Les zéolithes ou les mélanges de zéolithes se présentent sous forme de cristaux, de poudre ou de granulés.

Selon une variante particulièrement avantageuse de l'invention, la zéolithe ou le mélange de zéolithes sont ajoutés aux matières premières minérales de préférence préalablement mélangées avant ou en même temps que le liant bitumeux et la cire.

Dans ces conditions, on peut réduire la température de travail de 60°C environ (au lieu de travailler à 250°C, on peut travailler à 180°C-190°C). Pour réduire encore plus la température de travail, les inventeurs ont ajouté un troisième composant : une amine quaternaire de type colzuphalt®. On obtient alors une réduction de la température de travail de 10°C à 20°C supplémentaires environ (au lieu de travailler à 250°C, on peut travailler à 160°C-180°C).

Suivant que l'asphalte coulé est fabriqué pour faire du revêtement routier ou des chapes, les matières premières minérales, les quantités des composants, et le liant seront définis par le spécialiste en fonction de l'utilisation (contrainte, mode de pose etc.).

L'invention porte non seulement sur un procédé de fabrication de l'asphalte coulé, mais aussi sur un asphalte coulé en tant que tel.

## Revendications

1. Procédé de fabrication d'asphalte coulé, dans lequel on mélange les matières premières minérales chaudes de l'asphalte coulé dans un mélangeur puis on ajoute à ce mélange chaud un liant bitumineux de préférence chaud, en ajoutant au mélange et plus précisément avec le liant, une petite quantité de cires, soit 1 à 8% de la masse du liant, **caractérisé en ce que** l'on ajoute au mélange, de préférence avec le liant, plus précisément juste avant le liant, une petite quantité, soit 0,1 à 2% de la masse de l'ensemble du mélange, d'un autre composant qui réduise la température de travail du mélange mais qui ne soit pas de même nature que les cires.

2. Procédé selon la revendication 1, **caractérisé en ce que** le mélange fini peut être posé à une température de travail de moins de 205°C, de préférence de moins de 190°C, voire même dans certains cas de moins de 180°C et parfois même de moins de 170°C, voire de 160°C.

3. Procédé selon les revendications 1 et 2, **caractérisé en ce que** le mélange fini, avec tous les adjuvants, est malaxé pendant un certain temps avant la pose, de préférence dans un camion mélangeur, et maintenu de préférence à la température de travail.

4. Procédé selon l'une des revendications 1 à 3, **caractérisé par** l'ajout dans le mélange de composants de nature différente des cires et qui dégagent de la vapeur d'eau.

5. Procédé selon l'une des revendications 1 à 4, **caractérisé par** l'ajout d'une zéolithe ou d'un mélange de zéolithes comme composant de nature différente des cires.

6. Procédé selon la revendication 5, **caractérisé par** l'utilisation d'une zéolithe synthétique ou d'un mélange de zéolithes synthétiques et/ ou-sa phase de synthèse initiale amorphe.

7. Procédé selon l'une des revendications 1 à 6, **caractérisé par** l'ajout de cet autre composant dans une quantité équivalente à 0,3 à 0,5% environ de la masse de l'ensemble du mélange.

8. Procédé, selon la revendication 5, **caractérisé par** l'utilisation d'une zéolithe naturelle ou d'un mélange de zéolithes naturelles et par l'apport d'une quantité de zéolithe naturelle ou de mélange de zéolithes naturelles double de celle que l'on aurait utilisée avec une zéolithe de synthèse ou un mélange de zéolithes de synthèse.

9. Procédé selon l'une des revendications 1 à 8, **caractérisé par** l'utilisation de cires dans une quantité équivalente à environ 2,5% à 5% du liant injecté dans le mélange.

10. Procédé selon l'une des revendications 1 à 9, **caractérisé par** l'utilisation d'un bitume routier dur ou d'un bitume dur comme liant ou comme base du liant.

11. Procédé selon l'une des revendications 1 à 10, **caractérisé par** l'ajout au mélange d'une faible quantité d'un composant supplémentaire qui diminue la température du mélange mais qui n'appartient ni à la famille des cires, ni à celle des zéolithes.

12. Procédé selon la revendication 4 ou la revendication 11, **caractérisé par** l'ajout de chaux hydratée et/ou d'acide silicique et/ou une amine quaternaire comme autre composant ou comme composant supplémentaire pour abaisser la température de travail du mélange.

13. Procédé selon l'une des revendications 1 à 12, **caractérisé par le fait que** l'asphalte coulé est fabriqué comme asphalte de revêtement routier.

14. Procédé selon l'une des revendications 1 à 12, **caractérisé par le fait que** l'asphalte coulé est fabriqué pour des dalles en asphalte coulé

15. Asphalte coulé, contenant des matières premières minérales, un liant bitumineux et une petite quantité de cires, soit 1 à 8% environ de la masse du liant, **caractérisé par** l'ajout d'une petite quantité soit 0,1 à 2% de l'ensemble du mélange d'au moins un autre composant qui permet de diminuer la température de travail de l'asphalte coulé, mais qui n'est pas de la famille des cires.

16. Asphalte coulé selon la revendication 15, **caractérisé en ce que** le composant supplémentaire libère de l'eau.

17. Asphalte coulé selon la revendication 16, **caractérisé en ce que** le composant supplémentaire est une zéolithe ou un mélange de zéolithes.

18. Asphalte coulé selon les revendications 16 et 17, **caractérisé en ce que** le composant supplémentaire est une zéolithe de synthèse ou un mélange de zéolithes de synthèse et/ou sa phase de synthèse initiale amorphe.

19. Asphalte coulé selon l'une des revendications 15 à 18, **caractérisé en ce que** le composant supplémentaire représente environ 0,3 à 0,5% de l'ensemble du mélange.

20. Asphalte coulé selon la revendication 17, **caractérisé en ce que** le composant supplémentaire est une zéolithe naturelle ou un mélange de zéolithes naturelles

21. Asphalte coulé selon une des revendications 15 à 20, **caractérisé en ce que** l'asphalte coulé contient une quantité de cires de 2,5 à 5% environ de la masse du liant.

22. Asphalte coulé selon l'une des revendications 15 à 21, **caractérisé en ce que** le liant ou au moins la base du liant est un bitume routier dur ou un bitume dur.

23. Asphalte coulé selon l'une des revendications 15 à 22, **caractérisé en ce que** l'asphalte coulé contient une petite quantité d'un composant supplémentaire qui diminue la température de travail de l'asphalte coulé mais qui n'est ni de la famille des cires ni de celle des zéolithes.

24. Asphalte coulé selon la revendication 16 ou la revendication 23, **caractérisé en ce que** l'asphalte coulé contient de la chaux hydratée et/ou de l'acide silicique et/ou une amine quaternaire comme composant(s) supplémentaire(s) qui diminue(nt) la température de travail du mélange.

25. Asphalte coulé selon l'une des revendications 15 à 24, **caractérisé en ce qu'**il est développé comme asphalte coulé routier.

26. Asphalte coulé selon l'une des revendications 15 à 25, **caractérisé en ce que** l'asphalte coulé est développé comme chape en asphalte coulé.

## Claims

1. A method for making cast asphalt, wherein the hot mineral raw materials of cast asphalt are mixed in a mixer and a bituminous preferably hot binder is then added to this mixture, by adding to the mixture and more specifically with the binder, a small amount of waxes, i.e. 1-8% of the mass of the binder, **characterized in that** a small amount, i.e. 0.1-2% of the mass of the whole of the mixture, of another component which reduces the working temperature of the mixture, but which is not of the same nature as waxes, is added to the mixture, preferably with the binder, more specifically just before the binder.

2. The method according to claim 1, **characterized in that** the finished mixture may be laid at a working temperature of less than 205°C, preferably less than 190°C, or even in certain cases then than 180°C and often even less than 170°C or even 160°C.

3. The method according to claims 1 and 2, **characterized in that** the finished mixture with all the adjuvants is kneaded for a certain time before laying it, preferably in a truck mixer, and preferably maintained at the working temperature.

4. The method according to any of claims 1 to 3, **characterized by** the addition into the mixture of components of different nature from the waxes and which release steam.

5. The method according to any of claims 1 to 4, **characterized by** the addition of a zeolite or a mixture of zeolites as a component of different nature from waxes.

6. The method according to claim 5, **characterized by** the use of a synthetic zeolite or of a mixture of synthetic zeolites and/or its amorphous initial synthesis phase.

7. The method according to any of claims 1 to 6, **characterized by** the addition of this other component in an amount equivalent to about 0.3-0.5% of the mass of the whole of the mixture.

8. The method according to claim 5, **characterized by** the use of a natural zeolite or of a mixture of natural zeolites and by the provision of an amount of natural zeolite or of a mixture of natural zeolites, of twice the amount which would have been used with a synthetic zeolite or a mixture of synthetic zeolites.

9. The method according to any of claims 1 to 8, **characterized by** the use of waxes in an amount equivalent to about 2.5%-5% of the binder injected into the mixture.

10. The method according to any of claims 1 to 9, **characterized by** the use of hard road bitumen or a hard bitumen as a binder or as a base of the binder.

11. The method according to any of claims 1 to 10, **characterized by** the addition to the mixture of a small amount of an additional component which reduces the temperature of the mixture, but which belongs neither to the family of waxes nor to that of zeolites.

12. The method according to claim 4 or claim 11, **characterized by** the addition of hydrated lime and/or silicic acid and/or a quaternary amine as another component or as an additional component in order to lower the working temperature of the mixture.

13. The method according to any of claims 1 to 12, **characterized by** the fact that the cast asphalt is made as a road surfacing asphalt.

14. The method according to any of claims 1 to 12, **characterized by** the fact that the cast asphalt is made for cast asphalt slabs.

15. A cast asphalt, containing mineral raw materials, a bituminous binder and a small amount of waxes, i.e. about 1-8% of the mass of the binder, **characterized by** the addition of a small amount, i.e. 0.1-2% of the whole of the mixture, of at least one other component with which the working temperature of the cast asphalt may be reduced, but which is not from the family of waxes.

16. The cast asphalt according to claim 15, **characterized in that** the additional component releases water.

17. The cast asphalt according to claim 16, **characterized in that** the additional component is a zeolite or a mixture of zeolites.

18. The cast asphalt according to claims 16 and 17, **characterized in that** the additional component is a synthetic zeolite or a mixture of synthetic zeolites and/or its amorphous initial synthesis phase.

19. The cast asphalt according to any of claims 15 to 18, **characterized in that** the additional component represents about 0.3-0.5% of the whole of the mixture.

20. The cast asphalt according to claim 17, **characterized in that** the additional component is a natural zeolite or a mixture of natural zeolites.

21. The cast asphalt according to any of claims 15 to 20, **characterized in that** the cast asphalt contains an amount of waxes of about 2.5-5% of the mass of the binder.

22. The cast asphalt according to any of claims 15 to 21, **characterized in that** the binder or at least the base of the binder is a hard road bitumen or a hard bitumen.

23. The cast asphalt according to any of claims 15 to 22, **characterized in that** the cast asphalt contains a small amount of an additional component which reduces the working temperature of the cast asphalt but which is neither from the family of waxes nor from that of zeolites.

24. The cast asphalt according to claim 16 or claim 23, **characterized in that** the cast asphalt contains hydrated lime and/or silicic acid and/or a quaternary amine as additional component(s) which decrease(s) the working temperature of the mixture.

25. The cast asphalt according to any of claims 15 to 24, **characterized in that** it is developed as a road cast asphalt.

26. The cast asphalt according to any of claims 15 to 25, **characterized in that** the cast asphalt is developed as a cast asphalt apron.

## Patentansprüche

1. Verfahren zur Herstellung von Gussasphalt, bei dem die warmen mineralischen Rohstoffe des Gussasphalts in einem Mischer gemischt werden und dann diesem warmen Gemisch ein bituminöses, vorzugsweise warmes Bindemittel hinzugefügt wird, indem dem Gemisch und genauer mit dem Bindemittel eine kleine Menge Wachse, nämlich 1 bis 8 % der Bindemittelmasse, hinzugefügt wird, **dadurch gekennzeichnet, dass** dem Gemisch vorzugsweise mit dem Bindemittel, genauer kurz vor dem Bindemittel, eine kleine Menge, nämlich 0,1 bis 2 % der Masse des gesamten Gemischs, eines anderen Bestandteils hinzugefügt wird, der die Arbeitstemperatur des Gemischs reduziert, der aber nicht gleicher Art wie die Wachse ist.

2. Verfahren nach Anspruch 1, **dadurch gekennzeichnet, dass** das fertige Gemisch bei einer Arbeitstemperatur unter 205 °C, vorzugsweise unter 190 °C, ja sogar unter 180 °C in bestimmten Fällen und manchmal unter 170 °C, ja sogar 160 °C, aufbringbar ist.

3. Verfahren nach den Ansprüche 1 und 2, **dadurch gekennzeichnet, dass** das fertige Gemisch mit allen Zusätzen eine bestimmte Zeit vor dem Aufbringen gemischt wird, vorzugsweise in einem Mischfahrzeug, und vorzugsweise auf Arbeitstemperatur gehalten wird.

4. Verfahren nach einem der Ansprüche 1 bis 3, **dadurch gekennzeichnet, dass** dem Gemisch aus Bestandteilen verschiedener Art Wachse hinzugefügt werden, die Wasserdampf freisetzen.

5. Verfahren nach einem der Ansprüche 1 bis 4, das durch Hinzufügen eines Zeoliths oder eines Zeolithgemischs als Bestandteil, der sich in seiner Art von den Wachsen unterscheidet, **gekennzeichnet** ist.

6. Verfahren nach Anspruch 5, das durch die Verwendung eines synthetischen Zeoliths oder eines Gemischs synthetischer Zeolithe und/oder seine amorphe Startphase der Synthese **gekennzeichnet** ist.

7. Verfahren nach einem der Ansprüche 1 bis 6, das durch Hinzufügen dieses anderen Bestandteils in einer Menge **gekennzeichnet** ist, die zirka 0, bis 0,5 % der Masse des gesamten Gemischs entspricht.

8. Verfahren nach Anspruch 5, das durch die Verwendung eines natürlichen Zeoliths oder eines Gemischs natürlicher Zeolithe und durch Hinzufügen einer Menge natürlicher Zeolithe oder eines Gemischs natürlicher Zeolithe **gekennzeichnet** ist, die doppelt so groß ist wie die Menge, die man mit einem synthetischen Zeolith oder einem Gemisch synthetischer Zeolithe verwendet hätte.

9. Verfahren nach einem der Ansprüche 1 bis 8, das durch die Verwendung von Wachsen in einer Menge **gekennzeichnet** ist, die zirka 2,5 % bis 5 % des in das Gemisch eingebrachten Bindemittels entspricht.

10. Verfahren nach einem der Ansprüche 1 bis 9, das durch die Verwendung eines Straßen-Hartbitumens oder eines Hartbitumens als Bindemittel oder als Bindemittelbasis **gekennzeichnet** ist.

11. Verfahren nach einem der Ansprüche 1 bis 10, das durch Hinzufügen einer geringen Menge eines zusätzlichen Bestandteils zum Gemisch **gekennzeichnet** ist, der die Temperatur des Gemischs senkt, aber der weder zur Familie der Wachse, noch zur Familie der Zeolithe gehört.

12. Verfahren nach Anspruch 4 oder nach Anspruch 11, das durch Hinzufügen von Löschkalk und/oder von Kieselsäure und/oder eines Quaternäramins als anderer Bestandteil oder als zusätzlicher Bestandteil **gekennzeichnet** ist, um die Arbeitstemperatur des Gemischs abzusenken.

13. Verfahren nach einem der Ansprüche 1 bis 12, **dadurch gekennzeichnet, dass** der Gussasphalt als Straßenbelagsasphalt hergestellt ist.

14. Verfahren nach einem der Ansprüche 1 bis 12, **dadurch gekennzeichnet, dass** der Gussasphalt für Platten aus Gussasphalt hergestellt ist.

15. Gussasphalt, mineralische Rohstoffe, ein bituminöses Bindemittel und eine kleine Menge Wachse, nämlich zirka 1 bis 8 % der Bindemittelmasse enthaltend, der durch Hinzufügen einer kleinen Menge, nämlich von zirka 0,1 bis 2 % des gesamten Gemischs, mindestens eines anderen Bestandteils **gekennzeichnet** ist, der es erlaubt, die Arbeitstemperatur des Gussasphalts abzusenken, der aber nicht zur Familie der Wachse gehört.

16. Gussasphalt nach Anspruch 15, **dadurch gekennzeichnet, dass** der zusätzliche Bestandteil von Wasser befreit.

17. Gussasphalt nach Anspruch 16, **dadurch gekennzeichnet, dass** der zusätzliche Bestandteil ein Zeolith oder ein Zeolithgemisch ist.

18. Gussasphalt nach den Ansprüchen 16 und 17, **dadurch gekennzeichnet, dass** der zusätzliche Bestandteil ein synthetischer Zeolith oder ein Gemisch synthetischer Zeolithe und/oder seine amorphe Startphase der Synthese ist.

19. Gussasphalt nach einem der Ansprüche 15 bis 18, **dadurch gekennzeichnet, dass** der zusätzliche Bestandteil zirka 0,3 bis 0,5 % des Gesamtgemischs darstellt.

20. Gussasphalt nach Anspruch 17, **dadurch gekennzeichnet, dass** der zusätzliche Bestandteil ein natürlicher Zeolith oder ein Gemisch natürlicher Zeolithe ist.

21. Gussasphalt nach einem der Ansprüche 15 bis 20, **dadurch gekennzeichnet, dass** der Gussasphalt eine Wachsmenge von zirka 2,5 bis 5 % der Bindemittelmasse enthält.

22. Gussasphalt nach einem der Ansprüche 15 bis 21, **dadurch gekennzeichnet, dass** das Bindemittel oder mindestens die Bindemittelbasis ein Straßen-Hartbitumen oder ein Hartbitumen ist.

23. Gussasphalt nach einem der Ansprüche 15 bis 22, **dadurch gekennzeichnet, dass** der Gussasphalt eine kleine Menge eines zusätzlichen Bestandteils enthält, der die Arbeitstemperatur des Gussasphalts herabsetzt, der aber weder zur Familie der Wachse, noch zur Familie der Zeolithe gehört.

24. Gussasphalt nach Anspruch 16 oder Anspruch 23, **dadurch gekennzeichnet, dass** der Gussasphalt Löschkalk und/oder Kieselsäure und/oder ein Quaternäramin als zusätzliche/n Bestandteil/e enthält, die die Arbeitstemperatur des Gemischs absenken.

25. Gussasphalt nach einem der Ansprüche 15 bis 24, **dadurch gekennzeichnet, dass** er als Straßengussasphalt hergestellt ist.

26. Gussasphalt nach einem der Ansprüche 15 bis 25, **dadurch gekennzeichnet, dass** der Gussasphalt als Gussasphalt-Ausgleichsstrich hergestellt ist.
